# EUROPEAN PATENT SPECIFICATION

(11) **EP 1 014 603 B1**
(45) Date of publication and mention of the grant of the patent: **07.09.2005**
(21) Application number: 99440251.9
(22) Date of filing: 17.09.1999
(51) Int. Cl.: H04B 10/08, H04J 3/14

(54) **Method for detecting and locating a break in a synchronous digital hierarchy (SDH) optical link system**
Verfahren zur Detektion und Ortung eines Bruchs in einem nach der synchronen digitalen Hierarchie optischen Verbindungssystem
Méthode de détection et de localisation d'une rupture dans un système de liaison optique selon la hiérarchie numérique synchrone

(30) Priority: 29.09.1998 IT MI982080
(43) Date of publication of application: 28.06.2000
(73) Proprietor: ALCATEL, 75008 Paris (FR)
(72) Inventor: Conti, Mariangela, 20050 Villa Raverio, Milano (IT); Miriello, Virgilio, 20059 Vimercate, Milano (IT)
(74) Representative: Menzietti, Domenico

(56) References cited:
- US-A- 5 265 096
- US-A- 5 404 380
- US-A- 5 535 219
- US-A- 5 636 203

## Description

The present invention relates to the field of optical networks and in particular is concerned with the detection of failures and breaks in optical lines and related maintenance (restore) thereof.

As it is known, one of the outstanding problems in the field of transmission over optical lines arises from the need to assure the reciprocal operation of the various interconnected equipments, specially when such equipments come from different vendors and use different operating systems (multi-vendor network). It is also necessary to be able to detect with comparative facility a break in the line and to intervene in an aimed (i.e. exactly where the break took place) and quick manner for restoring the same. In SONET (Synchronous Optical NETwork) networks, after detecting a failure at the receiving side of a SONET equipment, it inserts an alarm signal for indication of the failure (AIS = alarm indication signal). This alarm is transmitted to the downstream SONET equipment, which detects the alarm indication. This is described in US5265096 and US5636203. The same method is used in SDH (Synchronous Digital Hierarchy) network.

In a multi-vendor optical transport network (OTN) and in SDH (Synchronous Digital Hierarchy) environment the maintenance procedures may be complicated if an Alarm Indication Signal (briefly, AIS) is not generated in the tributary of the WDM (Wavelength Division Multiplexing) terminal as a result of a break in the fiber at the aggregate port. The lack of AIS generation in response to the fiber break may cause problems since the network management systems (OTN and SDH) will be led to an erroneous fault location. In fact, if as a result of the fiber break, a LOS (Loss of Signal) indication is generated in the equipment that manages the network at the optical layer, another false LOS will occur in the equipment that manages the network at SDH layer.

Therefore, the main object of the present invention is to improve the fault location techniques in the OTN/SDH networks and the manageability level of the SDH connected to an OTN network.

This and further objects are achieved by the method set forth in the independent claim 1. Further advantageous features of the invention are set forth in the dependent claims which, along with claim 1, are to be intended as an integral part of the present description.

In practice, the present invention provides for the use of an alarm indication signal of the regeneration section in a non-compliant interconnection interface of the Optical transport network. The basic idea consists in extending the application of the Alarm Indication Signal (AIS) to the regeneration section of the SDH connection layer. Through the introduction of the optical layer, as the lower level of the transport network, the cable break event as a failure condition in the regeneration section of an SDH network, must be replaced with the event of a break in the transmission cable of an optical network.

A detailed description of the present invention is now given below by way of a mere exemplifying and non limiting example, and should be read with reference to the attached drawings, in which the various figures show:
- Fig. 1 diagrammatically illustrates a transport network structure;
- Fig. 2 diagrammatically illustrates the optical layer structure;
- Fig. 3 illustrates the interconnection of various administrative domains through a non-compliant OTN interface, the generation of all ONEs and the insertion of the Frame Alignment Signal (FAS);
- Fig. 4 highlights the bytes of the SDH/STM-n Section Overhead;
- Fig. 5 diagrammatically depicts a network section from a transmission end to a reception end in which a break at a low, or optical, layer has occurred; and
- Fig. 6 diagrammatically depicts a network section from a transmission end to a reception end in which a break at a higher layer has occurred.

Although it is thought that the drawings are thoroughly understandable to a person skilled in the art, a list of the abbreviations, words and acronyms used in such drawings is given below along with an explanation thereof. Subsequently, when it is considered more convenient, the various acronyms and English words will be freely used. Naturally, for a better understanding of the acronyms and abbreviations used in this description, reference should be made to the draft of recommendation G.872.
- ADM =: Add-Drop Multiplexer
- AIS =: Alarm Indication Signal
- Client Layer SNC: Sub-Network Connection at Client Layer
- DXC =: Digital Cross-Connect
- Far-end SDH: Far end of SDH
- FAS: Frame Alignment Signal
- FAS *generation*: generation of FAS signal
- FAS *insertion*: Insertion of FAS
- MSn: Multiplex Section level n
- Multiplex Section_OH: Multiplex Section OverHead
- Near-end SDH: SDH near end
- Non-OTN IrDi: non compliant OTN Inter-Domain Interface
- OAG: Optical Administrative Group
- OAM: Operating, Administration and Maintenance
- OCH: Optical Channel
- OCH_NC: Optical Channel Network Connection
- OCH_SNC: Optical Channel sub-Network Connection
- OSSn: Optical SDH Section level n
- OTHERS: Other clients or other digital transmission structures (ATM, PDH...)
- OTN: Optical Transport Network
- OTSn: Optical Transmission Section level n
- OTU_AIS *detection*: Alarm Indication Signal detection at Opt. Transm. Unit
- Regeneration Sect._OH: OverHead bytes at Regeneration Section
- RS_AIS detection: Alarm Indication Signal detection at Regeneration Section
- RSn: Regenerator Section level n
- SDH compliant Transp.: SDH compliant Transponder
- SSF: Server Signal Fail
- STM-n: Synchronous Transport Module level n
- TMN: Transport Management Network

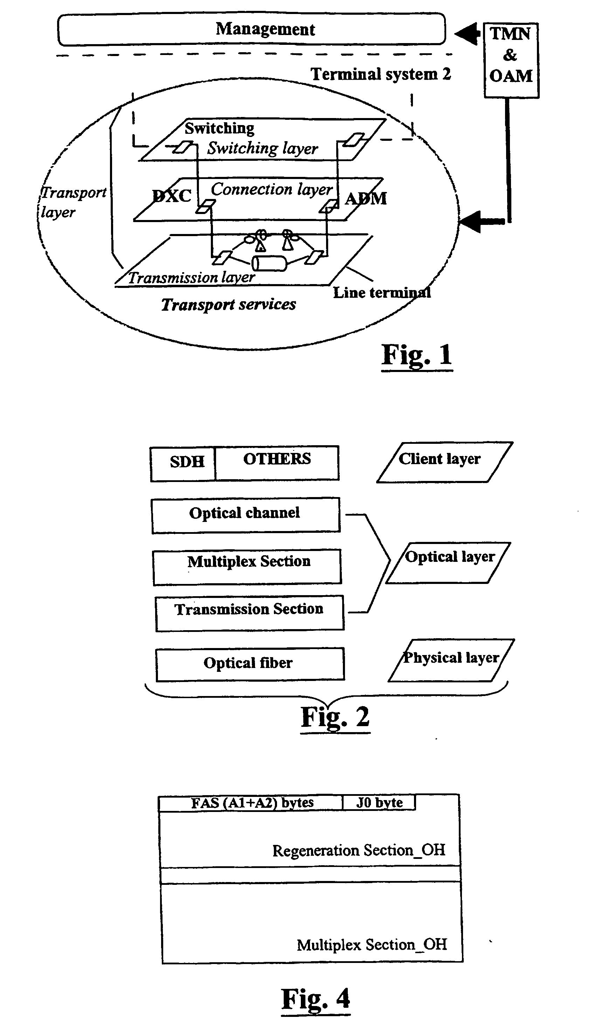

In order to assure the mutual operation between equipments coming from different vendors and used in the connection layer (SDH) the use of transponders is required (see Fig. 1) The object of the transponders is to support both the termination and adaptation functionalities at the ends of the network (Fig. 2).

The SDH frame processing at the nodes comprises the operating, administration and maintenance (OAM) functionality in a multi-vendor network. The OAM functions, such as the performance control and the connection test, unavailable in the initial steps of the optical layer strategy, could be implemented in the SDH-compliant transponders where the non intrusive processing of the SDH regenerator section should take place.

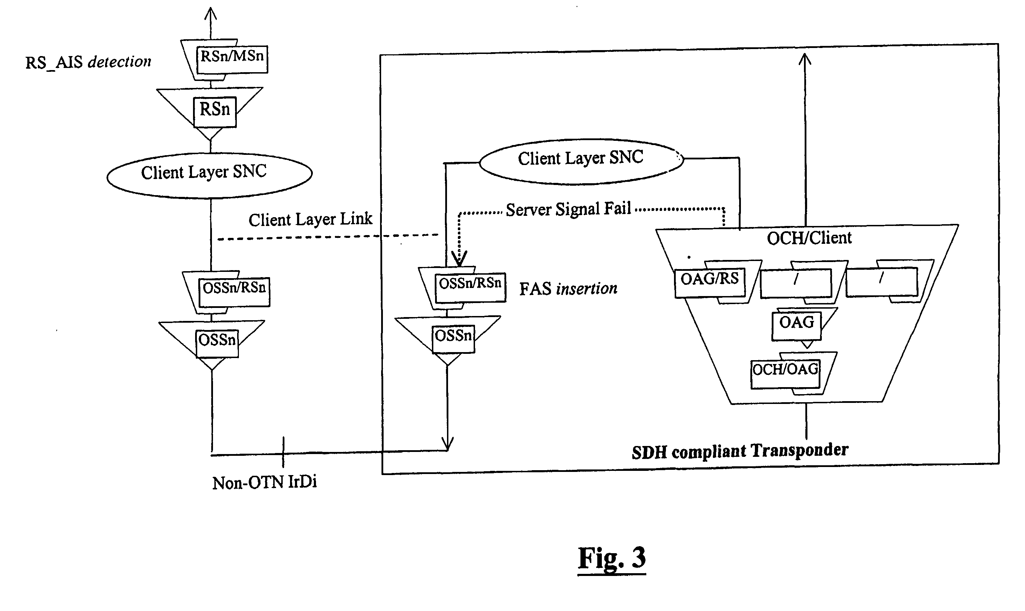

In particular, as mentioned above, the maintenance procedures in a multivendor environment can be complicated if an Alarm Indication Signal (AIS) is not provided at the interconnection of the various administrative domains (Client layer link) through a non-OTN-compliant interdomain interface (Non-OTN IrDi), Fig. 3, as a result of the break in a fiber or of a general failure in the optical domain or in the remote SDH link in the client layer. The lack of this information can create problems since the network management systems, pertaining to domains of different operators, will be led to erroneously locate the failure by detecting false failure causes and deciding time consuming, unproductive and therefore undesirable actions.

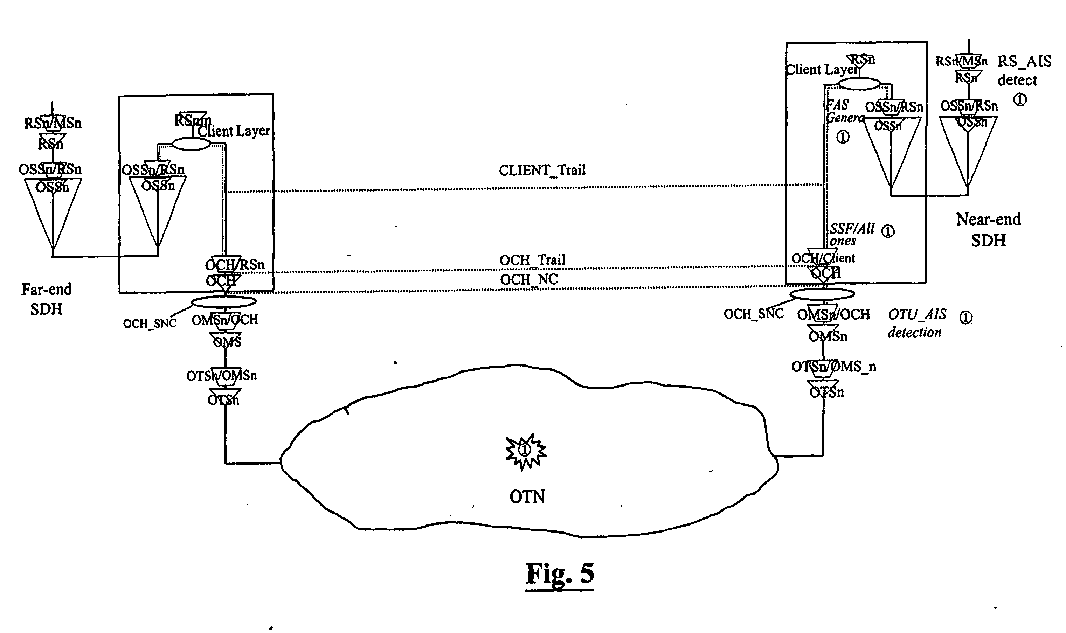

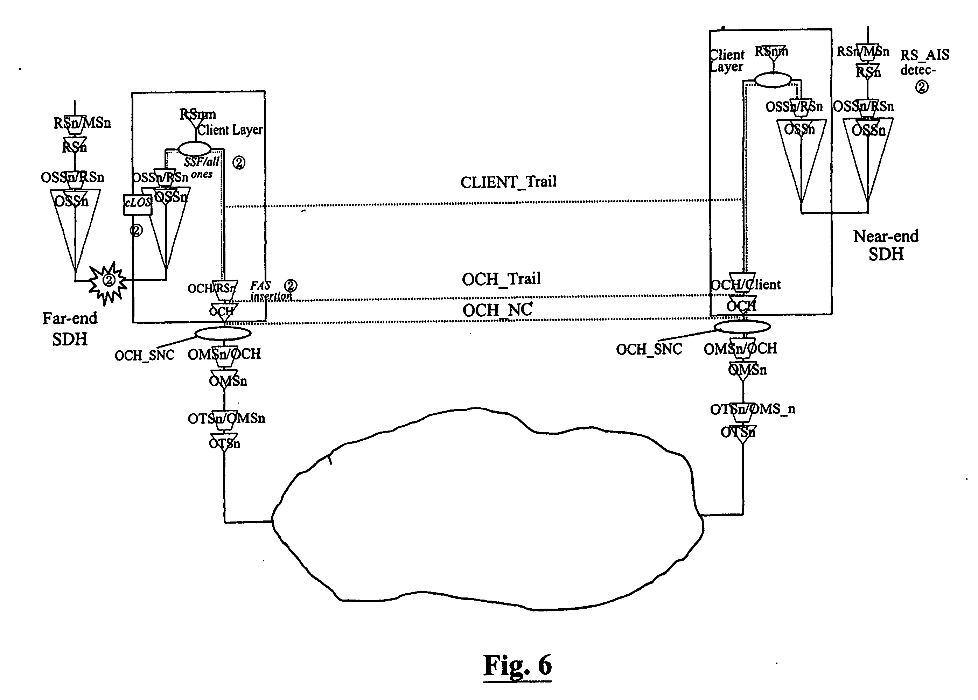

In fact, as a result of a failure in the optical domain (Fig. 5) or in the SDH client layer far end link (Fig. 6) a LOS will be detected in the optical layer or in the client layer far end SDH link and several other false LOSs in the near end SDH links in the client layer.

As a result, wrong laser turn-off automatic procedures will be activated at each near SDH link in the client layer.

The concept which the present invention is based on is that the SDH-compliant transponders, through adaptation functions (Fig. 3) are able to construct an SDH-compliant AIS signal (RS-AIS): in this way the SDH network manager at the near terminal is not induced in error, i.e. false LOS will not be generated. Preferably, the RS-AIS signal is substantially constructed by sending the SDH frame alignment signal plus all ONEs in the remaining bytes of the SDH frame (or at least all ONEs in the J0 bytes), as illustrated in Fig. 4 that shows the bytes of the SDH/STM-n section overhead. The peculiarity of the proposed solution consists in that, in the event of a break in a cable at a generic point of the OTN network (see Fig. 5, "break 1") or at the far end in the client layer (Fig. 6, "break 2") the same RS_AIS signal is detected at the near-end SDH level.

The main advantage of the solution in accordance with the present invention is to allow for a significant improvement in the fault and break location techniques all over the entire optical transport network and in the manageability level of the SDH connected to the OTN.

By analyzing Fig. 5 in more detail it should be observed that, as a result of a break in a cable or of any other failure in the OTN network, an OTU_AIS, i.e. an alarm indication signal in the optical transport unit, will be detected (OTU_AIS detection) downstream of the OTN network; this OTU_AIS signal is generated by the adaptation function of the optical multiplexing section at the node adjacent to the failure; subsequently an RS_AIS is constructed as specified above (by sending the SDH frame alignment signal plus all ONEs in the remaining bytes of the frame); then the Frame Alignment Signal is generated (FAS generation); and finally, the RS_AIS is detected (RS_AIS detection).

Analogously, if the failure occurs at the far-end of the client layer, a loss of signal (cLOS) indication will be generated; an SSF/all ONEs will be constructed; a frame alignment signal will be inserted (FAS insertion) and finally, the RS_AIS will be detected (RS_AIS detection) at the SDH near-end.

Therefore, as it will be understood, the solution in accordance with the present invention allows for the transportation, in a transparent manner, of all the RS_layer signal (and in particular the RSn_DCC bytes); the RSn trail is not terminated/regenerated at the inlet/outlet of the OTN/SDH network unless in response to a failure. The RSn layer non-intrusive monitoring is possible by monitoring bytes B1, J0 and the SDH frame alignment sync bytes.

## Claims

1. Method for detecting a break in an SDH optical link system and locating the position of said break, said system comprising an SDH/OTN network **with an SDH layer and an OTN layer and comprising** at least a pair of transponders, **the method including the following steps:**
- in the event of a break **inside said OTN layer, one of the transponders** detecting an alarm indication signal (OTU_AIS) **of said OTN layer;**
**characterized by further including the following steps:**
- in case the alarm indication signal of said OTN layer has been detected, said transponder generating in the regenerator section of the SDH layer an SDH-compliant alarm indication signal (RS_AIS), which is transmitted to a near end SDH terminal;
- said near end SDH terminal detecting said SDH-compliant alarm indication signal (RS_AIS) of the SDH layer.

2. Method according to claim 1, **characterized in that** said SDH-compliant alarm indication signal (RS_AIS) is generated by sending an SDH frame alignment signal (FAS) in addition to all ONEs at least in the byte J0.

3. Transponder connecting an OTN layer to an SDH layer, the transponder including:
- receiving means (OCH/Client) adapted to detect from the OTN layer an alarm indication signal (OTU_AIS) indicating a break inside the OTN layer;
**characterized in that** it further includes:
- transmitting means (OSSn/RSn) adapted to generate, in case the alarm indication signal of the OTN layer has been detected, in the regenerator section of the SDH layer an SDH-compliant alarm indication signal (RS_AIS) and to transmit the SDH-compliant alarm indication signal (RS_AIS).

## Patentansprüche

1. Verfahren zur Detektion eines Bruchs in einem SDH (synchrone digitale Hierarchie) optischen Verbindungssystem und Ortung des besagten Bruchs, wobei das besagte System ein SDH/OTN Netzwerk mit einer SDH Ebene und einer OTN Ebene umfasst und wenigstens ein Paar von Transpondern enthält, und das Verfahren folgende Schritte umfasst:
- im Falle eines Bruchs innerhalb der besagten OTN Ebene detektiert einer der Transponder ein Alarmanzeigesignal (OTU_AIS) der besagten OTN Ebene; **gekennzeichnet dadurch, dass** es weiterhin folgende Schritte umfasst:
- falls das Alarmanzeigesignal der besagten OTN Ebene detektiert wurde, der besagte Transponder im Regenerationsabschnitt der SDH Ebene ein SDH kompatibles Alarmanzeigesignal (RS_AIS) erzeugt, das zu einem nahe gelegenen SDH Terminal übertragen wird,
- das besagte nahe gelegene SDH Terminal das besagte SDH kompatible Alarmanzeigesignal (RS_AIS) der SDH Ebene detektiert.

2. Verfahren nach Anspruch 1, **dadurch gekennzeichnet, dass** das besagte SDH kompatible Alarmanzeigesignal (RS_AIS) erzeugt wird, indem ein SDH Rahmenabgleichsignal (FAS) (= Frame Alignment Signal) zusätzlich zu lauter EINSEN, wenigstens im JO Byte gesendet wird.

3. Transponder, der eine OTN Ebene mit einer SDH Ebene verbindet, wobei der Transponder umfasst:
- Empfängermittel (OCH/Client), die eingerichtet sind, ein Alarmanzeigesignal (OTU_AIS) der OTN Ebene zu empfangen, das einen Bruch innerhalb der OTN Ebene anzeigt, **dadurch gekennzeichnet, dass** er weiterhin umfasst:
- Sendemittel (OSSn/RSn), die eingerichtet sind, falls das Alarmanzeigesignal der besagten OTN Ebene detektiert wurde, im Regenerationsabschnitt der SDH Ebene ein SDH kompatibles Alarmanzeigesignal (RS_AIS) zu erzeugen und das SDH kompatible Alarmanzeigesignal (RS_AIS) zu senden.

## Revendications

1. Procédé de détection d'une rupture dans un système de liaison optique SDH et de localisation de la position de ladite rupture, ledit système comprenant un réseau SDH/OTN ayant une couche SDH et une couche OTN et comprenant au moins une paire de transpondeurs, le procédé comprenant les étapes suivantes :
- en présence d'une rupture à l'intérieur de ladite couche OTN, détection par un des transpondeurs d'un signal d'indication d'alarme (OTU_AIS) de ladite couche OTN ;
**caractérisé en ce qu'**il comprend en outre les étapes suivantes :
- au cas où le signal d'indication d'alarme de ladite couche OTN aurait été détecté, génération par ledit transpondeur dans la section de régénération de ladite couche SDH d'un signal d'indication d'alarme conforme à la SDH (RS_AIS), qui est transmis à un terminal SDH à commande locale ;
- détection par ledit terminal SDH à commande locale dudit signal d'indication d'alarme conforme à la SDH (RS_AIS) de la couche SDH.

2. Procédé selon la revendication 1, **caractérisé en ce que** ledit signal d'indication d'alarme conforme à la SDH (RS_AIS) est généré en envoyant un signal d'alignement de trame (FAS) de SDH en plus de tous les UNS au moins dans l'octet J0.

3. Transpondeur connectant une couche OTN à une couche SDH, le transpondeur comprenant :
- des moyens de réception (OCH/Client) adaptés pour détecter à partir de la couche OTN un signal d'indication d'alarme (OTU_AIS) indiquant une rupture à l'intérieur de la couche OTN ;
**caractérisé en ce qu'**il comprend en outre :
- des moyens de transmission (OSSn/RSn) adaptés pour générer, au cas où le signal d'indication d'alarme de la couche OTN aurait été détecté, dans la section de régénération de la couche SDH, un signal d'indication d'alarme compatible SDH (RS_AIS) et pour transmettre le signal d'indication d'alarme conforme à la SDH (RS_AIS).
